# EUROPEAN PATENT APPLICATION

(11) **EP 0 999 245 A1**
(43) Date of publication of application: **10.05.2000**
(21) Application number: 99121160.8
(22) Date of filing: 22.10.1999
(51) Int. Cl.: C09D 163/00, C08G 59/54, C08G 59/18

(54) **Coating composition**

(30) Priority: 06.11.1998 GB 9824423
(71) Applicant: E. Wood Limited, Northallerton, North Yorkshire DL6 2XA (GB)
(72) Inventor: Robinson, Ian, North Yorkshire, Y 07 1 RX (GB)
(74) Representative: Howden, Christopher Andrew

(57) **Abstract**

A liquid, cold curing, solvent free coating composition for lining internally gas or oil transmission pipelines comprises a liquid epoxide resin, modified by the inclusion of aliphatic polar structures. The epoxide resin preferably has an epoxy polar mass of 250 - 280. The curing agent may be a liquid polyamide or cycloaliphatic polyamine adduct.

## Description

THIS INVENTION relates to a coating composition, for example for coating or lining oil or gas pipelines, particularly pipelines which are used to carry oil and gas on a continuous basis.

At present, most oil and gas pipelines are either left unprotected or alternatively, a protective coating comprising a thin film epoxy or a fusion bonded epoxy is applied to the pipe surface to provide protection of the pipeline during storage, construction and operation. When oil and gas pipelines were first being installed in large quantities, there was a very strong body of opinion which held that internal protection was not necessary because of the non-corrosive nature of the gases and liquids involved. Over the last twenty years, however, the practice of applying an internal lining to oil and gas pipelines has become more prevalent due to the benefits which a thin internal coating or lining can provide. In particular, such a thin coating will protect the pipeline in storage prior to the pipeline being installed and, in addition, the pipeline still receives protection during the installation and commissioning phases, and therefore corrosion within the pipeline prior to operation is kept to a minimum.

Generally speaking, in Europe and S.E. Asia, such linings or coatings are applied by spraying a liquid epoxy resin composition onto the pipe surfaces, to form a thin film which sets to provide the desired lining or coating. The liquid resin is generally factory-applied, by airless spray, to pipe sections of 12-14 m in length and a diameter of up to 1.2 m, to give dry film thicknesses of 50-90 microns.

The coatings are typically formed by dissolving a solid epoxide resin and a semi-solid reactive polyamide hardener in an organic solvent to provide the sprayable liquid composition. Inorganic pigments and/or fillers are typically added. Such a liquid sprayable composition would typically contain 50-55% by volume of organic solvent. More recently there has been a trend towards coatings with lower levels of solvent. These "high solids" materials are preferred due to the reduced environmental impact of the material involved although where large volumes of product are being processed, considerable volumes of solvent are still emitted into the atmosphere. Based on technology which is currently available, the maximum solids content which can be achieved in a thin film epoxy coating is around 75% by volume with the balance being made up of volatile organic solvents which can cause harm to the environment.

As an alternative to solvent based coatings, water based materials have also been investigated and have been used on a very limited basis but the main disadvantage with these materials is that the technology is expensive and the actual cost of the water based coating is well in excess of that of the more traditional solvent based materials.

In North America in particular, fusion bonded epoxies are favoured. To line a pipeline with these materials, a powder is applied to the internal surface of the pipeline and is then heated to temperatures around 220°C to fuse the powder and produce a liquid coating which flows over the pipe surface and hardens within a matter of seconds thereby producing a continuous coating which is firmly bonded to the underlying steel structure.

The main drawback to this particular process lies in the fact that high quantities of energy are required to melt the powdered material.

Solvent free liquid epoxy coatings, applied by dual-feed heated airless spray, (in order to compensate for their inherently high viscosity and short "pot-life"), constitute another possible approach. However, such materials exhibit a number of deficiencies when compared to the established solvented systems. Typical liquid epoxide resins (diglycidyl ethers of bisphenol A) of epoxy molar mass 180-190, cured with proprietary polyamine or liquid polyamide hardeners, yield essentially brittle films which do not afford the flexibility required by the acknowledged performance specification for thin film internal coatings, viz. the American Petroleum Institute Recommended Practice 5L2 (API RP 5L2). Addition of plasticisers to increase flexibility is possible but compromises corrosion resistance and/or water and solvent resistance, resulting in performance which does not meet the requirements of API RP 5L2.

It is therefore the object of the invention to provide a cold curing, liquid applied coating which can be applied to a steel surface, without the use of solvents or water, and which will provide a protective layer with outstanding long term durability in line with the requirements of API RP 5L2.

According to the invention there is provided a solvent free coating suitable for the internal lining of gas or oil pipelines, comprising a liquid epoxide resin and curing agent.

In preferred embodiments of the invention, there is provided a solvent free coating composition which comprises a flexibilised liquid epoxide resin, a liquid polyamide or polyamine curing agent and inorganic pigments/fillers. In the most preferred embodiments of the invention, the epoxide resin is modified with aliphatic polar groups and has an epoxy molar mass of 250-280, and the curing agent comprises a liquid polyamide of amine equivalent weight 110-240.

The coating composition may be stored as two components, one containing the liquid epoxy resin and the other containing the liquid curing agent, the two components being brought together just before or during application for example, using a dual-feed, heated airless spray, so that the two components first come into contact only in the spray head or even only as they strike the surface to be coated.

Embodiments of the invention and, for purposes of comparison, coating systems of the prior art and/or otherwise not in accordance with the present invention are described below with reference to the accompanying Tables 1 to 7.

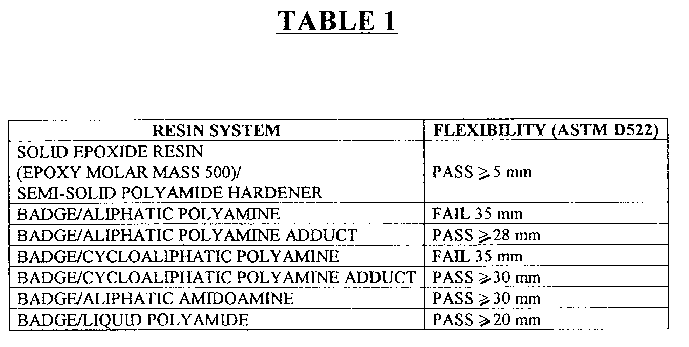

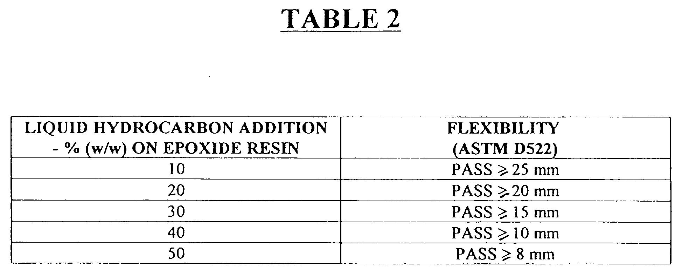

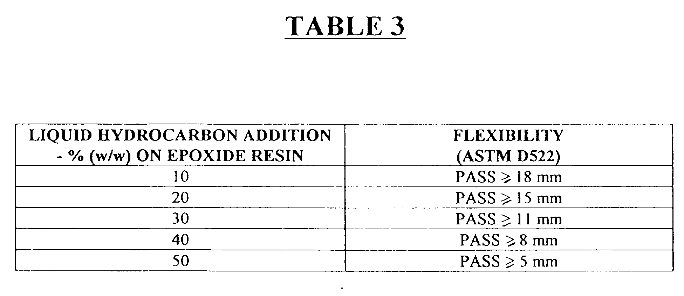

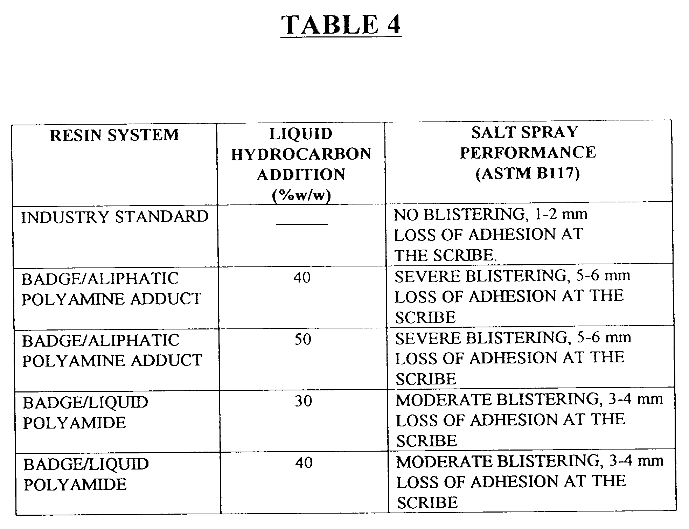

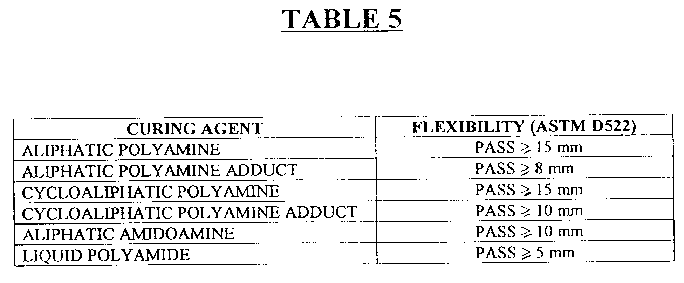

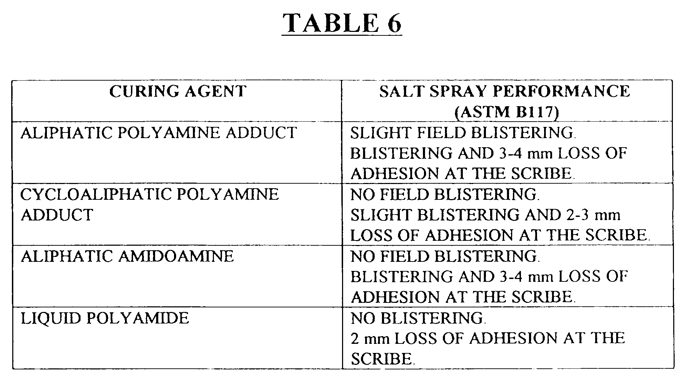

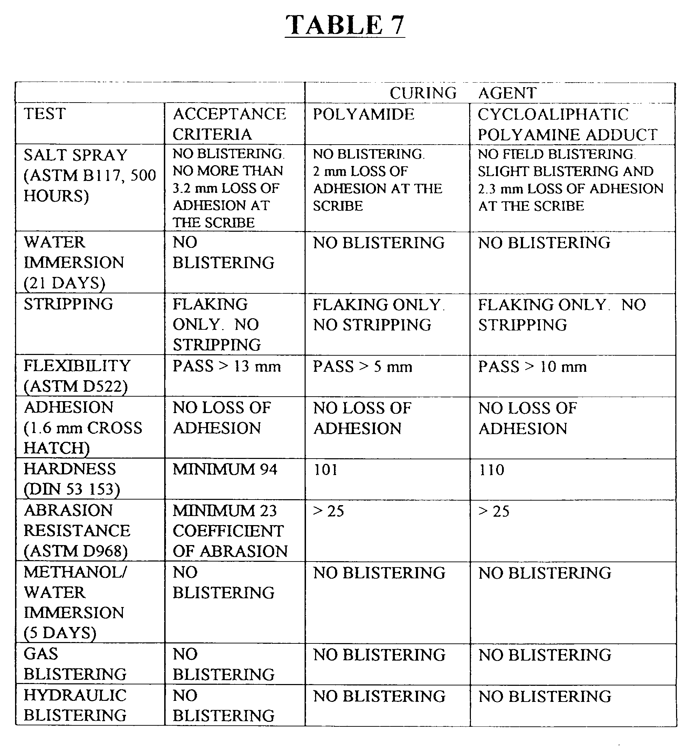

TABLE 1 illustrates the comparative flexibility of various resin systems for use as coating compositions. The first resin system in Table 1 is the "industry standard" system formed by dissolving solid epoxide resin, (of epoxy molar mass of around 500), and semi-solid polyamide hardener in an appropriate organic solvent. The other systems noted in Table 1 are various solvent-free systems comprising liquid epoxide resin (bisphenol A diglycidyl ether - BADGE) and proprietary polyamine or liquid polyamide hardeners. The flexibility measurement applies, of course, to the resin system after setting or hardening. API RP 5L2 requires the coating to exhibit no cracking or loss of adhesion at a mandrel diameter > 13 mm when tested in accordance with ASTM D522. It can be seen from Table 1 that the "industry standard" solvented system comfortably meets this requirement whereas the liquid epoxide resin based systems do not. It will be understood that in the tables herein the terms "FAIL" and "PASS", refer to failure of the coating, not of the requirements of API RP 5L2 and that the smaller the figure, in mm, set out, the greater the flexibility.

The inventor considered modification of liquid epoxide resin-based systems by the addition of a non-reactive liquid hydrocarbon resin.

TABLE 2 illustrates the flexibility obtained from the liquid epoxy/aliphatic polyamine adduct system, (3rd item in Table 1), when modified by the addition of a non-reactive liquid hydrocarbon resin. It can be seen that an addition of minimally 40% w/w, based on liquid epoxide resin, is necessary to produce the desired flexibility.

TABLE 3 illustrates the flexibility obtained from the liquid epoxy/liquid polyamide system (last item in Table 1) when modified by addition of the non-reactive hydrocarbon resin. As anticipated from the results shown in Table 1, a slightly lower addition level (minimally 30% w/w on epoxide resin) is required to attain the desired flexibility when compared to the aliphatic polyamine adduct-cured system.

TABLE 4 illustrates the corrosion resistance obtained from the solvent-free systems identified in Tables 2 and 3 (except for those using aliphatic and cycloaliphatic polyamine hardener), when formulated into a pigmented system utilising synthetic iron oxide and magnesium silicate, in comparison to the "industry standard" solvented system. Testing was carried out as per API RP 5L2, i.e. 500 hours exposure in accordance with ASTM B117 at a dry film thickness of 50 ± 5 microns. It can be seen that only the "industry standard" solvented system meets the requirements of API RP 5L2, viz. no blistering and a maximum of 3.2 mm loss of adhesion at the scribe.

TABLE 5 illustrates the flexibility obtained from a modified liquid epoxide resin of higher epoxy molar mass (250-280) when cured with the hardeners highlighted in Table 1, modification of the resin being effected by incorporation of an aliphatic structure with polar groups within the backbone of the resin. The results shown in Table 5 indicate that an epoxide resin modified as described above, cured with a number of proprietary hardeners, can produce a solvent-free composition which meets the flexibility requirements of API RP 5L2.

TABLE 6 illustrates the corrosion resistance obtained from the best-performing of the systems identified in Table 5 when formulated into a pigmented system utilising synthetic iron oxide and magnesium silicate. Testing was again in accordance with ASTM B117 (500 hours exposure). The results show that by combining a suitably modified liquid epoxide resin with appropriate liquid curing agents, it is possible to formulate a totally solvent free system which combines the key attributes of flexibility and corrosion resistance.

TABLE 7 illustrates the performance of the polyamide and cycloaliphatic polyamine adduct-cured systems highlighted in Table 6 when assessed in accordance with the full requirements of API RP 5L2, Section 3.5. The results show that by combining a suitably modified liquid epoxide resin with appropriate liquid curing agents, it is possible to formulate a completely solvent-free cold curing coating, capable of being applied by dual-feed heated airless spray, and which totally meets the requirements of the acknowledged performance specification within the oil and gas transmission industry.

The features disclosed in the foregoing description, in the following claims and/or in the accompanying drawings may, both separately and in any combination thereof, be material for realising the invention in diverse forms thereof.

## Claims

1. A liquid, cold curing, solvent free coating composition suitable for the internal lining of oil or gas transmission pipelines, the composition comprising a modified liquid epoxide resin in conjunction with a liquid curing agent or hardener.

2. A coating composition according to claim 1 wherein the epoxide resin is modified by the inclusion of aliphatic polar structures.

3. A coating composition according to claims 1 and 2 wherein the epoxide resin has an epoxy molar mass of 250 - 280.

4. A composition according to any preceding claim wherein the curing agent is a liquid polyamide.

5. A composition according to any preceding claim wherein the curing agent is a liquid polyamide of amine equivalent 110 - 240.

6. A composition according to claims 1 to 3 wherein the curing agent is a cycloaliphatic polyamine adduct.

7. A composition according to claims 1 to 3 wherein the curing agent comprises a blend of a liquid polyamide and a cycloaliphatic polyamine adduct.

8. A composition according to any preceding claim which is applied by means of duel feed heated airless spray to give a film thickness of 50 - 100 microns.

9. A coating system suitable for use in coating or lining pipelines comprising a first, solvent-free liquid or flowable component comprising a modified liquid epoxide resin and a second, solvent-free liquid or flowable component comprising a liquid curing agent or hardener, such that the two components, when mixed together form a synthetic resinous material which will set at ambient temperature.

10. A method of coating or lining pipelines, comprising providing a first, solvent-free, liquid or flowable component comprising a modified liquid epoxide resin, providing a second, solvent-free, liquid or flowable component comprising a liquid curing agent or hardener, supplying said components separately to an applicator means and applying the components to the surface to be coated such that these components are mixed only in the applicator means or in transmit to the surface to be coated or on striking the latter.
